# EUROPEAN PATENT APPLICATION

(11) **EP 4 730 894 A1**
(43) Date of publication of application: **22.04.2026**
(21) Application number: 24850887.1
(22) Date of filing: 31.07.2024
(51) Int. Cl.: H04W 72/563

(54) **DATA SCHEDULING METHOD AND APPARATUS, AND COMMUNICATION DEVICE AND STORAGE MEDIUM**

(30) Priority: 09.08.2023 CN 202311002215
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CHAI, Li, Beijing 100053 (CN)
(74) Representative: Patentgruppen A/S
(86) International application number: PCT/CN2024/108939
(87) International publication number: WO 2025/031242

(57) **Abstract**

A data scheduling method and apparatus, a communication device, and a storage medium are provided. The method includes: transmitting or receiving, by a first communication device, data of at least one flow, wherein there is an association relationship between the data of the at least one flow.

## Description

### CROSS-REFERENCE TO RELATED APPLICATION

The present application is based on and claims priority to Chinese Patent Application No. 202311002215.2, filed on August 9, 2023, a disclosure of which is incorporated herein by reference in its entirety.

### TECHNICAL FIELD

The present application relates to the field of communication technology, and in particular, to a data scheduling method and apparatus, a communication device and a storage medium.

### BACKGROUND

The characteristic requirements of Extended Reality (XR) services exhibit multi-dimensional attributes that differ from the Quality of Service (QoS) requirements of traditional services; for example, the requirements for latency and reliability are significantly different. The XR service data processing methods provided by the related art cannot satisfy these characteristic requirements of XR services.

### SUMMARY

To address the related technical issues, embodiments of the present application provide a data scheduling method and apparatus, a communication device, and a storage medium.

The technical solution of the embodiments of the present application is implemented as follows.

An embodiment of the present application provides a data scheduling method, applied to a first communication device. The method includes:
transmitting or receiving data of at least one flow, wherein there is an association relationship between the data of the at least one flow.

An embodiment of the present application further provides a data scheduling apparatus, including:
a first transceiver unit, configured to transmit or receive data of at least one flow, wherein there is an association relationship between the data of the at least one flow.

An embodiment of the present application further provides a data scheduling apparatus, including:
a second transceiver unit, configured to deliver first information to a first communication device, wherein the first information is used to indicate an association relationship between data of at least one flow.

An embodiment of the present application further provides a first communication device, including a first processor and a first communication interface, wherein
the first communication interface is configured to transmit or receive data of at least one flow, wherein there is an association relationship between the data of the at least one flow.

An embodiment of the present application further provides a second communication device, including a second processor and a second communication interface, wherein
the second communication interface is configured to deliver first information to a first communication device, wherein the first information is used to indicate an association relationship between data of at least one flow.

An embodiment of the present application further provides a communication device, including a processor and a memory configured to store a computer program executable by the processor, wherein
the processor is configured to execute the computer program to implement steps of any method on a first communication device side, or implement steps of any method on a second communication device side.

An embodiment of the present application further provides a storage medium storing thereon a computer program, characterized in that, the computer program is used to be executed by a processor to implement the steps of any method on the first communication device side, or implement the steps of any method on the second communication device side.

In the data scheduling method and apparatus, communication device, and storage medium provided in the embodiments of the present application, the second communication device delivers first information to a first communication device, wherein the first information is used to indicate an association relationship between data of at least one flow. The second communication device transmits or receives data of the at least one flow, wherein there is an association relationship between data of the at least one flow. In the above solution, since data of the at least one flow that has the association relationship needs to be cooperatively processed, the first communication device transmits or receives data of the at least one flow that has the association relationship, thereby implementing cooperative processing of data of the at least one flow that has the association relationship, and meeting cooperative processing requirements between XR services.

### BRIEF DESCRIPTION OF THE DRAWINGS

FIG. 1 is a diagram illustrating an example of a Group of Pictures (GOP) structure in the related art.
FIG. 2 is a diagram illustrating an example of a Protocol Data Unit (PDU) set in the related art.
FIG. 3 is a schematic flowchart illustrating an implementation of a data scheduling method according to an embodiment of the present application.
FIG. 4 is a schematic flowchart illustrating an implementation of another data scheduling method according to an embodiment of the present application.
FIG. 5 is a schematic structural diagram of a data scheduling apparatus according to an embodiment of the present application.
FIG. 6 is a schematic structural diagram of another data scheduling apparatus according to an embodiment of the present application.
FIG. 7 is a schematic structural diagram of a first communication device according to an embodiment of the present application.
FIG. 8 is a schematic structural diagram of a second communication device according to an embodiment of the present application.

### DETAILED DESCRIPTION

XR is an umbrella term for all technologies that create immersive experiences, including Virtual Reality (VR), Augmented Reality (AR), and Mixed Reality (MR). The XR, encompassing VR, AR, MR, and other technologies that create immersive experiences, is collectively referred to as Extended Reality.

An XR system has two prominent characteristics: the integration of information from the real world and the virtual world, and real-time interactivity. XR systems employ multi-channel interaction. Humans inherently possess multi-sensory perception capabilities, and virtual environments can provide users with a highly immersive and realistic sensory experience. Gesture, body posture, voice, and even eye-gaze tracking can serve as interaction methods in augmented reality systems. Additionally, tactile feedback, smell, sound, and force feedback can be used as outputs, thereby achieving a combination of multi-channel augmented reality interaction and user intent.

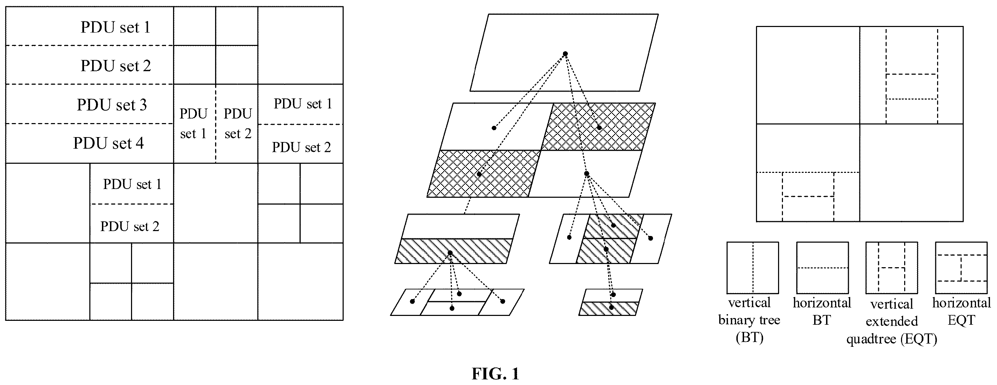

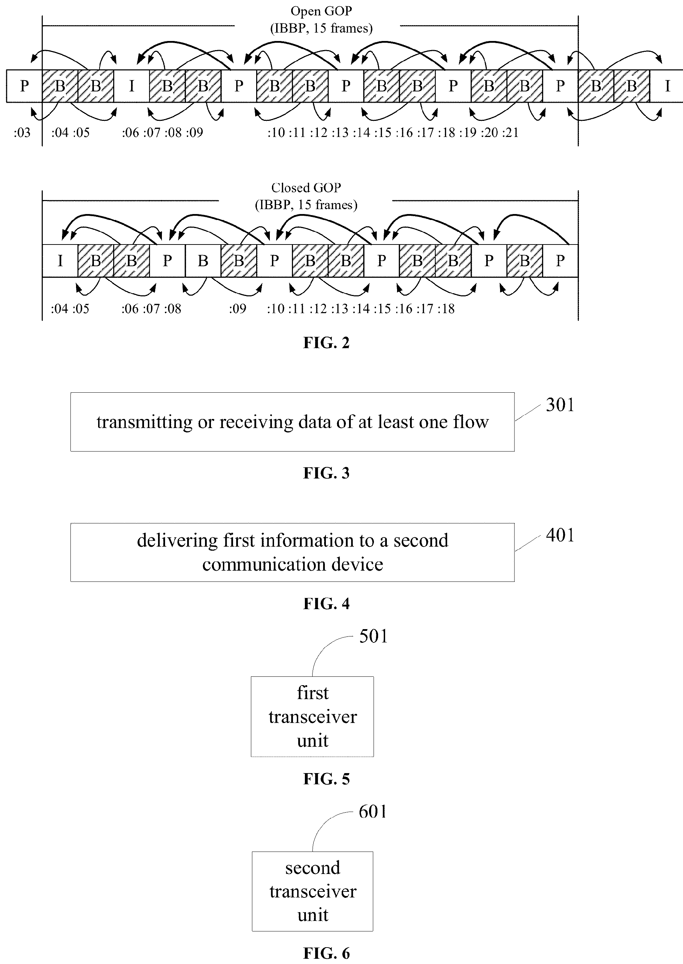

On the other hand, characteristic requirements of XR services have multi-dimensional characteristic features, which are greatly different from Quality of Service (QoS) requirements of traditional services (for example, requirements on delay, packet error rate and/or reliability). Specifically, for traditional services, a base station side usually only needs to guarantee delay through prescheduling and multi-configured resources, and guarantee reliability through multi-configured resources or multiple retransmissions. Therefore, in the related art, by configuring a logical channel and configuring a priority bound to the logical channel, QoS requirements of traditional services can basically be satisfied. However, characteristic requirements of XR services have multi-dimensional complex characteristic features. 1) As shown in FIG. 1, there is an association relationship between multiple packets and/or there is an association relationship between multiple QoS flows, and a group of packets belonging to a Protocol Data Unit (PDU) set is jointly processed, wherein the PDU set is also referred to as a PDU collection. 2) Priorities of packets within one service or one QoS flow are different. For example, as shown in FIG. 2, a priority or importance of an intra-coded frame (I-frame) and a predictive-coded frame (P-frame, Predictive-Frame) is differentiated. 3) Due to synchronization requirements of multi-mode services, there is also an association relationship between packets of different services, and an association relationship between packets of different services needs to be considered during scheduling.

Currently, for some XR services, such as live-streaming scenarios in product sales, concerts, or festival galas-which involve the transmission of human images, voices, background music, and environmental information around products or individuals-cooperative processing across these services is required. However, the prior art fails to achieve this and thus cannot meet the cooperative processing demands between XR services.

Based on this, in various embodiments of the present application, a second communication device delivers first information to a first communication device, wherein the first information is used to indicate an association relationship between data of at least one flow. The first communication device then transmits or receives data of the at least one flow, wherein there is an association relationship between the data of the at least one flow. In the above solution, since data of the at least one flow that has the association relationship needs to be cooperatively processed, the first communication device transmits or receives data of the at least one flow that has the association relationship, thereby implementing cooperative processing of data of the at least one flow that has the association relationship, and meeting cooperative processing requirements between XR services.

The communication system to which the embodiments of the present application are applied may include a network device, a network node, and a first communication device (the first communication device may also be referred to as a first network node, a first communication node, and so on). The network node includes an application server, and the first communication device includes a terminal. The second communication device in the present application may be a network device, i.e., a device that communicates with the first communication device. The second communication device may also be a base station that provides communication coverage within a certain area and can communicate with a first communication device (such as a terminal) located within that area. For example, the second communication device may be a base station in various communication systems, such as an evolved Node B (eNB) in a Long-Term Evolution (LTE) system, or a base station in a 5G system, a New Radio (NR) system, or a 6G system. The first communication device may be one or more base stations, transmission points, reception points, central units, distributed units, Building Baseband Units (BBUs), Remote Radio Units (RRUs), relays, Integrated Access and Backhaul (IAB), reconfigurable intelligent surfaces, communication balloons, aerial base stations, antennas, satellite base stations, terminals communicating via sidelink, and the like. The first communication device may also be a terminal, or another module with specific communication functions. The first communication device may also be an application server providing sensing functions and/or Artificial Intelligence (AI) functions. The first communication device may further be a core network node, such as a User Plane Function (UPF), an Application Function (AF), a Mobility Management Entity (MME), an Access and Mobility Management Function (AMF), an integrated core network device, or another network element used for connection establishment.

In the present disclosure, the term "service" may represent at least one of the following concepts: a service, a PDU session, a Quality of Service (QoS) flow, a stream (or a service data flow), a radio bearer, or a logical channel.

The term "data" as used herein may refer to one or more of the following: a data packet, Physical Uplink Shared Channel (PUSCH) transmission, Physical Downlink Shared Channel (PDSCH) transmission, a data unit, a PDU set, a sample, a slice, a tile, a flow, a transmission, or a transport block, among others.

The following describes the present application in further detail with reference to the accompanying drawings and embodiments.

An embodiment of the present application provides a data scheduling method, applied to a first communication device. As shown in FIG. 3, the method includes:
step 301: transmitting or receiving data of at least one flow, wherein there is an association relationship between the data of the at least one flow.

Here, transmitting or receiving data of the at least one flow may be understood as performing cooperative processing of data of the at least one flow that has a specific association relationship.

For example, when a first communication device is an application server, the first communication device may transmit data of the at least one flow to an application server or a terminal, and may receive data of the at least one flow from the application server and/or at least one terminal. An association relationship between data of the at least one flow may be preconfigured. When the first communication device is a terminal, the first communication device may transmit data of the at least one flow to an application server, a terminal or a network device, and may receive data of the at least one flow transmitted from the application server and/or the network device and/or at least one terminal. The association relationship between data of the at least one flow may be preconfigured, may be indicated by the network device, or may be determined by the terminal according to related information transmitted by the network device.

There being an association relationship between data of the at least one flow includes: that there is an association relationship between data of the same flow, and/or that there is an association relationship between data of different flows. The association relationship may be an explicit association relationship or an implicit association relationship.

It should be noted that data of the at least one flow that has the association relationship may be transmitted in batches, or may be transmitted at one time, which is specifically determined according to an amount of data of the at least one flow.

To enable the first communication device to perform cooperative processing of data that have the association relationship, in an embodiment, the association relationship includes at least one of the following:
Quality of Service (QoS) coordination;
time synchronization;
belonging to one QoS flow;
belonging to one Protocol Data Unit (PDU) set;
belonging to one radio bearer; or
belonging to one application server; wherein
the QoS coordination indicates that values of QoS parameters are identical, or a difference between the QoS parameters is less than or equal to a predetermined threshold; and the QoS parameter includes at least one of a packet error rate, latency, jitter, or reliability.

Here, that the association relationship includes belonging to one QoS flow means that data of the at least one flow belongs to one QoS flow; that the association relationship includes belonging to one PDU set means that data of the at least one flow belongs to one PDU set; that the association relationship includes belonging to one radio bearer means that data of the at least one flow belongs to one radio bearer; and that the association relationship includes belonging to one application server means that data of the at least one flow belongs to one application server.

A difference in QoS parameters may be understood as a difference between values of QoS parameters for different data of the same flow, or as a difference between values of QoS parameters for different flows.

Specifically, a QoS parameter may be at least one of a Packet Delay Budget (PDB), a Packet Error Rate (PER), jitter, a Packet Set Delay Budget (PSDB), a Packet Set Error Rate (PSER), and packet set jitter.

Time synchronization may mean that transmitting/receiving times for data of multiple flows are the same, or that a difference between transmitting/receiving times for data of multiple flows is less than or equal to a predetermined threshold.

To expand application scenarios for cooperative processing of data that have an association relationship, in an embodiment, the at least one flow includes at least one of the following:
a service;
a PDU session;
a QoS flow;
a service data flow;
a radio bearer;
a logical channel;
a PDU set;
a PDU;
a sampling flow;
a slice; or
a tile.

Here, a service may also be understood as a service flow or a service packet. A sampling flow may be understood as a data flow or service data flow obtained through sampling.

In the case that the at least one flow includes a QoS flow, in an embodiment, Quality of Service Flow Identifiers (QFIs) corresponding to different flows in the at least one flow are different or the same.

Here, the QFIs corresponding to different flows in the at least one flow may be the same or different. Specifically, the QFIs of different flows in the at least one flow may all be distinct, partially identical, or completely identical. A QFI is a unique identifier, and one QFI is used to indicate one QoS flow. The values of QoS parameters for different QoS flows may be the same or different.

One PDU session corresponds to at least one QoS flow, and user-plane data packets with the same QFI within a PDU session receive the same forwarding treatment, such as scheduling priority.

It should be noted that, to enable the first communication device to cooperatively process data of QoS flows, in an embodiment, the QFIs corresponding to different flows in the at least one flow are the same. In this case, the at least one flow includes at least one of the following:
a QoS flow, a sub-QoS flow, a service data flow, a radio bearer, a logical channel, a PDU set, or a sampling flow.

In the case that the first communication device is a network node (e.g., a terminal or a core network node) capable of communicating with a network device, the network device may indicate to the first communication device an association relationship between data of the at least one flow, so that the first communication device performs cooperative processing on the data that have the association relationship. Based on this, in an embodiment, the method further includes:
receiving first information delivered by a second communication device, wherein the first information is used to indicate the association relationship between the data of the at least one flow.

Here, before transmitting or receiving the data of the at least one flow, first information delivered by the second communication device is also received, so that the first communication device transmits or receives the data of the at least one flow according to the first information. The second communication device includes a network device, and the network device may include a base station.

Optionally, in the case that the first communication device is a network node (e.g., a terminal or a core network node) capable of communicating with a network device, in an embodiment, the data of the at least one flow is carried in different TBs, and the different TBs are transmitted in a same time segment; or the data of the at least one flow is carried in different carriers, and the different carriers are transmitted in a same time segment.

Here, a time segment is also referred to as a time period.

In the case that the first communication device is a network node capable of communicating with a network device (for example, a terminal or a core network node), in an embodiment, data of the at least one flow is carried in the same Transport Block (TB) or is carried in a transmission resource indicated by the same uplink grant (UL grant).

Here, data of the at least one flow that has a cooperative transmitting requirement may be transmitted in the same TB, or may be transmitted in the transmission resource indicated by the same UL grant. As a result, radio resources occupied by data of the at least one flow that has the association relationship can be reduced, and the cooperative transmitting requirement for the data can be satisfied.

In the case that the first communication device is a network node capable of communicating with a network device (for example, a terminal or a core network node) and the at least one flow includes a logical channel, in an embodiment, the method further includes:
receiving second information and/or third information delivered by a second communication device, wherein
the second information is used to indicate a flow that is allowed to transmit data by using the same TB and/or the transmission resource indicated by the same UL grant, and the third information is used to indicate a transmission configuration when transmitting data of different flows by using the same TB and/or the transmission resource indicated by the same UL grant.

Here, in the related art, data of the logical channel with the highest priority is typically transmitted first. After data of the highest-priority logical channel is transmitted, if there is remaining space, data of the next-highest-priority logical channel is then transmitted. Cooperative transmitting of data of different flows that have an association relationship (for example, different logical channels) is not considered.

In an embodiment of the present application, the second information may be a mapping restriction parameter configured for a logical channel. The mapping restriction parameter includes information of flows allowed to transmit data by using the same TB and/or a transmission resource indicated by the same UL grant, so that a first communication device can determine, according to the mapping restriction parameter, flows whose data is allowed to be transmitted on the same TB and/or on a transmission resource indicated by the same UL grant. To facilitate the first communication device in determining logical channels that have an association relationship, in an embodiment, the second information includes at least one of the following:
information indicating at least one logical channel that is allowed to transmit data by using the same TB;
information indicating at least one logical channel that is allowed to transmit data by using the transmission resource indicated by the same UL grant;
information indicating an associated priority of at least one logical channel that is allowed to transmit data by using the same TB; or
information indicating an associated priority of at least one logical channel that is allowed to transmit data by using the transmission resource indicated by the same UL grant.

In other words, the second information may be at least one of the following:
second information is information indicating at least one logical channel that is allowed to transmit data by using the same TB;
second information is information indicating at least one logical channel that is allowed to transmit data by using the transmission resource indicated by the same UL grant;
second information is information indicating an associated priority of at least one logical channel that is allowed to transmit data by using the same TB;
second information is information indicating an associated priority of at least one logical channel that is allowed to transmit data by using the transmission resource indicated by the same UL grant; or
the second information can be carried in the configuration information of the first logical channel.

Specifically, the second information may be carried in Radio Resource Control (RRC) signaling and/or Media Access Control (MAC) signaling. The second information may be a mapping restriction parameter for logical channel configuration, and the mapping restriction parameter is used to control a logical channel priority ordering and/or logical channel selection procedure. The mapping restriction parameter may include information of at least one logical channel that is allowed to use the same TB. The second information may be at least one of the following:
the second information may be information of a second logical channel that is allowed to use the same TB, carried in configuration information of a first logical channel;
the second information may be information of a second logical channel and a third logical channel that are allowed to use the same TB, carried in configuration information of the first logical channel;
the second information may be an associated priority, further indicated in configuration information of the first logical channel, between a second logical channel and a third logical channel that have an association relationship; for example, between the second logical channel and the third logical channel, data of the second logical channel and data of the first logical channel are preferentially placed in the same TB;
the second information may be information of a second logical channel that is allowed to transmit data by using a transmission resource indicated by the same UL grant, carried in configuration information of the first logical channel;
the second information may be information of a second logical channel and a third logical channel that are allowed to transmit data by using a transmission resource indicated by the same UL grant, carried in configuration information of the first logical channel;
the second information may be an associated priority, further indicated in configuration information of the first logical channel, between a second logical channel and a third logical channel that have an association relationship; for example, between the second logical channel and the third logical channel, the second logical channel and the first logical channel are preferentially placed in a transmission resource indicated by the same UL grant; wherein the transmission resource indicated by the same UL grant is one TB (transport block) and/or multiple TBs.

To cooperatively transmit data of at least one logical channel that is carried in the same TB by using a transmission resource indicated by the same UL grant, in an embodiment, transmitting data of at least one flow includes:
transmitting, via a first UL grant, data of at least one logical channel that is allowed to be transmitted by using the same TB as indicated by the second information, under a condition that the following are satisfied:
the second information includes information indicating a logical channel that is allowed to use the same TB to transmit data; and
content of fourth information corresponding to the first UL grant is consistent with or does not conflict with content of the third information;
wherein the fourth information includes information of a logical channel that is allowed to transmit for the UL grant.

Here, when performing a new transmission, if the second information includes information indicating a logical channel allowed to transmit data by using the same TB, and content of fourth information corresponding to a first UL grant is consistent with or does not conflict with content of third information, the first UL grant is selected, and data of at least one logical channel that is allowed to use the same TB to transmit data as indicated by the second information is transmitted by using a transmission resource indicated by the first UL grant.

Specifically, for example, the second information is information of at least one logical channel (for example, information of a second logical channel and information of a third logical channel) that is allowed to transmit data by using a transmission resource indicated by the same UL grant, carried in configuration information of a first logical channel. In this case, fourth information carried in a UL grant received by a first communication device (for example, a terminal) indicates that logical channels allowed to be transmitted for the UL grant are the first logical channel, the second logical channel, and the third logical channel. Regardless of whether a priority corresponding to a fourth logical channel is higher or lower than priorities corresponding to the second logical channel and the third logical channel, when a UL grant size is greater than buffer data of the first logical channel, data of the second logical channel and the third logical channel is preferentially transmitted, and data of the fourth logical channel is considered with a lower priority. In this way, data of logical channels that have an association relationship can be transmitted together to a peer end with priority. The second information may also be carried in a higher-layer signaling or an application-layer signaling.

It should be noted that the third information may be preconfigured information, for example, the third information is predefined in a second communication device; the third information may also be carried in Downlink Control Information (DCI) of a UL grant. A transmission configuration may be used to configure at least one of the following for data of different flows: a transmission resource, a Modulation and Coding Scheme (MCS), a Subcarrier Spacing (SCS), or a TB size.

In the case that data of different flows is carried in the same TB or is carried in a transmission resource indicated by the same UL grant, in order to cooperatively transmit data of different flows that have an association relationship, in an embodiment, the third information is used to indicate at least one of the following:
a number of bytes occupied in the same TB by data of different flows;
a Modulation and Coding Scheme (MCS) used by data of different flows;
a transmission resource occupied, in the transmission resource indicated by the same UL grant, by data of different flows; or
a Subcarrier Spacing (SCS) used when transmitting data of different flows by using the transmission resource indicated by the same UL grant.

Here, a number of bytes occupied by data of different flows in the same TB may be understood as a TB size respectively corresponding to data of different flows in the same TB.

A transmission resource includes at least one of a time-domain resource, a frequency-domain resource, a time-domain position, or a frequency-domain position. For example, a transmission resource occupied by data of different flows in a transmission resource indicated by the same UL grant may include at least one of the following:
a time-domain resource and a corresponding time-domain position occupied by data of different flows in a time-domain resource indicated by the same UL grant; or
a frequency-domain resource and a corresponding frequency-domain position occupied by data of different flows in a frequency-domain resource indicated by the same UL grant.

It should be noted that, in the related art, a UL grant does not support scheduling data that have different SCSs and/or MCSs.

In the case that a first communication device is a network node (for example, a terminal or a core network node) capable of communicating with a network device, and the first communication device has received second information, data of the at least one flow that has the association relationship may be determined according to the second information. Based on this, in an embodiment, the method further includes:
determining an association relationship between data of the at least one flow according to the second information.

Here, because the second information is used to indicate flows that are allowed to transmit data by using the same TB and/or a transmission resource indicated by the same UL grant, information of flows that are allowed to transmit data by using the same TB and/or a transmission resource indicated by the same UL grant may be obtained by parsing the second information. The first communication device may perform priority sorting of logical channels and/or selection of logical channels according to the obtained information of flows. Furthermore, the first communication device may determine flows that have the association relationship according to the obtained information of flows, to obtain the association relationship between data of the at least one flow. When the second information includes information of only one flow, then there is an association relationship between data of that flow. When the second information includes information of at least two flows, then there is an association relationship between data of the flows. The flow may be at least one of the following: a service, a PDU session, a QoS flow, a service data flow, a radio bearer, a logical channel, a PDU set, a PDU, a sampling flow, a slice, or a tile.

In the case that data of different flows are carried in the same TB, or are carried in a transmission resource indicated by the same UL grant, to improve efficiency of data transmission, the at least one flow includes a first flow and a second flow that has an association relationship; and the transmitting the data of the at least one flow includes at least one of the following:
in the case that a number of bytes of data of the second flow is less than and/or equal to a first threshold, transmitting data of the second flow by puncturing data of the first flow; or
in the case that a number of bytes of data of the second flow is greater than and/or equal to the first threshold, transmitting data of the first flow and data of the second flow by using the same TB or the transmission resource indicated by the same UL grant.

Here, the first communication device may obtain an association relationship between multiple flows of the first communication device through at least one of the following:
information indicating that a first flow and a second flow have an association relationship;
network indication;
an association relationship between multiple flows obtained by a higher layer or an application layer of the first communication device, wherein the higher layer may be a Non-Access-Stratum (NAS);
the first communication device detects that values of QoS parameters of the multiple flows are the same, or that a difference in QoS parameters is less than or equal to a predetermined threshold. For example, a transmitting time difference between the first flow and the second flow is less than or equal to a second threshold.

Here, the network indication may be that a Radio Resource Control (RRC) signaling directly configures the association relationship between the multiple flows of the first communication device, or may be derived from a mapping restriction parameter of a logical channel or from fourth information carried or indicated by a UL grant. Multiple flows may be understood as at least two flows.

Here, the multiple flows that have the association relationship may belong to a same first communication device or to multiple first communication devices.

Considering that when a size of data of a second flow is relatively small, puncturing and transmitting data of the second flow onto data of a first flow enables a peer end to successfully parse the first flow. However, when the size of data of the second flow is relatively large, puncturing and transmitting data of the second flow onto data of the first flow would cause substantial loss of data of the second flow, making it likely that the peer end cannot parse data of the second flow. Based on this, in the embodiments of the present application, in the case that a number of bytes of data of the second flow is less than and/or equal to a first threshold and there is an association relationship between the first flow and the second flow, data of the second flow is punctured and transmitted onto data of the first flow. In the case that the number of bytes of data of the second flow is greater than and/or equal to the first threshold and there is an association relationship between the first flow and the second flow, data of the first flow and data of the second flow are transmitted by using the same TB or the transmission resource indicated by the same UL grant.

The number of bytes of data may be understood as a size of the data. That there is an association relationship between the first flow and the second flow may include: a transmitting time difference between the first flow and the second flow is less than or equal to a second threshold. The transmitting time difference between the first flow and the second flow may be understood as a difference or time interval between a transmitting time of the first flow and a transmitting time of the second flow. That the transmitting time difference between the first flow and the second flow is less than or equal to the second threshold may be understood as that an association relationship between the first flow and the second flow includes time synchronization.

It should be noted that, in the case that the number of bytes of data of the second flow is greater than and/or equal to a first threshold, and the first flow and the second flow do not have an association relationship, for example, a transmitting time difference between the first flow and the second flow is greater than a second threshold, data of the first flow and data of the second flow are transmitted by using different TBs or transmission resources indicated by different UL grants. The first threshold and the second threshold may be predetermined thresholds or preconfigured thresholds.

The first flow and the second flow may be understood as any two flows that have an association relationship. In the case that the number of flows that have the association relationship is greater than 2 and is an even number, the flows that have the association relationship may be grouped, with each group including two flows. Specifically, a flow may be a logical channel, a PDU set, a radio bearer, or the like.

In an embodiment, before transmitting data of the at least one flow, the method further includes:
transmitting a Buffer Status Report (BSR) to the second communication device; wherein content of the BSR may include at least one of the following:
an indication that there is an association relationship between a first logical channel and a second logical channel;
a type of an association relationship between a first logical channel and a second logical channel;
buffer data sizes respectively corresponding to a first logical channel and a second logical channel;
buffer data sizes of logical channel groups respectively corresponding to a first logical channel and a second logical channel;
a sum of buffer data sizes of a first logical channel and a second logical channel;
a sum of buffer data sizes of logical channel groups respectively corresponding to a first logical channel and a second logical channel;
Identifiers (IDs) of a first logical channel and a second logical channel that have an association relationship;
IDs of logical channel groups respectively corresponding to a first logical channel and a second logical channel that have an association relationship; or
IDs of the first communication devices respectively corresponding to a first logical channel and a second logical channel that have an association relationship, wherein the first logical channel and the second logical channel respectively belong to different first communication devices.

Here, in the case that the at least one flow includes a logical channel, before the first communication device (e.g., a terminal) transmits data of the at least one flow to a second communication device (a network device), the first communication device further transmits a BSR to the second communication device.

Here, the first communication device may, according to an association relationship between logical channels, determine respective buffer data sizes of logical channels that have the association relationship, determine a sum of buffer data sizes of the logical channels that have the association relationship, and may also determine related information of logical channel groups respectively corresponding to the logical channels that have the association relationship.

When the first logical channel and the second logical channel belong to a first communication device A and a first communication device B, respectively, a BSR transmitted by the first communication device A carries IDs of the first communication devices respectively corresponding to the first logical channel and the second logical channel that have the association relationship. For example, the BSR carries an ID of the first communication device A corresponding to the first logical channel and an ID of the first communication device B corresponding to the second logical channel. Here, an ID of a first communication device may be preconfigured by the network device. For example, an ID of a first communication device with C-RNTI 11011 or TMSI 11793 is 1, and an ID of a first communication device with C-RNTI 11022 or TMSI 11863 is 2. C-RNTI refers to a Temporary Cell-Radio Network Temporary Identifier. TMSI refers to a Temporary Mobile Subscriber Identity.

When the network device receives the BSR, it may obtain, according to the content of the BSR, an association relationship between logical channels, and/or buffer data sizes of logical channels that have the association relationship.

Furthermore, in the case that a peer end of the first communication device experiences poor user experience or Quality of Experience, the peer end may instruct the first communication device, via a higher-layer indication, to change an association relationship of already buffered data of at least one flow. For example, the peer end transmits a higher-layer signaling carrying fifth information to the first communication device. The first communication device then changes the association relationship of the data of the at least one flow indicated by the fifth information according to the fifth information. For example, the fifth information transmitted by the peer end indicates a noticeable time misalignment between at least two flows, such as one flow being video and another flow being haptic feedback, wherein the arrival times of the video flow data and the haptic flow data differ significantly. According to the fifth information, the first communication device adopts a time synchronization relationship with higher accuracy for scheduling and transmitting the data of the corresponding two flows.

Here, an implementation for the first communication device to adopt a time synchronization relationship with higher accuracy for scheduling and transmitting data of at least one flow may include:
reducing a time range consumed for transmitting the data of the at least one flow; or
synchronously transmitting the data of the at least one flow, changing the granularity from per-logical-channel to per-packet Serial Number (SN). In other words, synchronously transmitting the data of the at least one flow at the granularity of logical channels is adjusted to synchronously transmitting the data of the at least one flow at the granularity of packet SNs.

Specifically, for example, the time range consumed for transmitting the data of the at least one flow is adjusted from 10 milliseconds (ms) to 5 ms. That is, the maximum duration consumed for transmitting the data of the at least one flow together is adjusted from 10 ms to 5 ms.

As another example, transmitting the data of the at least one flow at the granularity of logical channels within 10 ms is adjusted to transmitting the data of the at least one flow at the granularity of packet SNs within 10 ms.

It should be noted that the fifth information may specifically be information such as time misalignment, jitter misalignment, and/or large QoS difference. Alternatively, information such as time misalignment, jitter misalignment, and/or large QoS difference may be defined as one or more new events, and the fifth information is used to indicate the defined one or more new events.

To conserve transmission resources, in an embodiment, before transmitting data of the at least one flow, the method further includes:
performing data discarding and/or data scheduling on the data of the at least one flow according to a priority and/or an importance level corresponding to the at least one flow.

Here, data with a lower priority and/or a lower importance level between the data of the at least one flow may be discarded; alternatively, data discarding may be performed on a portion of data at each priority level in an order from a higher priority to a lower priority, or on a portion of data at each importance level in an order from a higher importance level to a lower importance level.

For example, a first communication device receives information on an importance level of a PDU set and divides the importance level of the PDU set into m1 levels, wherein the information on the importance level of the PDU set is used to indicate the importance level of the PDU set. The data of the at least one flow may be divided into m1 priority or importance levels, and data discarding and/or data scheduling may be performed on the data of the at least one flow according to the priority and/or the importance level corresponding to the at least one flow.

Here, the first communication device may obtain the information on the importance level of the PDU set through dedicated configuration of a network device, such as configuration parameters of Packet Data Convergence Protocol (PDCP) and/or Radio Link Control (RLC).

In the case that data of the at least one flow is divided into multiple levels according to the priority and/or the importance level, to accurately determine data that can be discarded or needs to be retained, in an embodiment, performing data discarding on the data of the at least one flow according to the priority and/or the importance level corresponding to the at least one flow includes at least one of the following:
in a load state, performing data discarding on the data of the at least one flow according to a discard timer duration corresponding to the priority and/or the importance level of the at least one flow;
performing data discarding on the data of the at least one flow according to a discard timer duration corresponding to the priority and/or the importance level of the at least one flow in a level of the load state;
in a load state, performing data discarding on the data of the at least one flow according to a discard timer corresponding to the priority and/or the importance level of the at least one flow;
discarding data of a corresponding priority and/or importance level of a flow according to a level of the load state;
in a load state, retaining or discarding data of a corresponding data length according to the priority and/or the importance level of the at least one flow;
retaining or discarding data of a corresponding data length according to the priority and/or the importance level of the at least one flow; or
retaining or discarding data of a corresponding data length in a level of the load state according to the priority and/or the importance level of the at least one flow.

Here, a priority and/or importance level of one flow corresponds to one discard timer duration, or priorities and/or importance levels of different data of the same flow correspond to one discard timer duration. Discard timer durations corresponding to different priorities and/or different importance levels may be the same or different. A discard timer duration may be abbreviated as a timer duration, and a discard timer may be abbreviated as a timer.

A priority and/or importance level of one flow corresponds to one discard timer, or priorities and/or importance levels of different data of the same flow correspond to one discard timer. Timer durations of discard timers corresponding to different priorities and/or different importance levels may be the same or different.

One level of the load state may correspond to one priority and/or importance level; different levels of the load state may correspond to the same priority and/or importance level, or may correspond to different priorities and/or importance levels.

Data lengths corresponding to the same priority and/or importance level in different levels of the load state may be the same or different.

It should be noted that data discarding may be performed in the case that a discard timer expires, or after a discard timer has been started and the discard timer duration has elapsed. A discard timer may be started in a load state or upon receiving data of at least one flow. That is, upon receiving data of at least one flow, a discard timer corresponding to the priority and/or importance level of the corresponding flow is started, and data of the corresponding flow is discarded in the case that the discard timer expires.

In the case that a network device configures a first indication, data discarding and/or data scheduling is performed according to the first indication. Based on this, in an embodiment, the performing data discarding and/or data scheduling on the data of the at least one flow according to the priority and/or the importance level corresponding to the at least one flow includes at least one of the following:
determining, according to a first indication, a discard timer duration corresponding to the priority and/or the importance level of the at least one flow, and performing data discarding on the data of the at least one flow according to the determined discard timer duration;
determining, according to a first indication, a discard timer corresponding to the priority and/or the importance level of the at least one flow, and performing data discarding on the data of the at least one flow according to the determined discard timer duration;
discarding data corresponding to the priority and/or the importance level of a flow according to a first indication;
determining, according to a first indication, the priority and/or the importance level of the at least one flow, and retaining or discarding data of a corresponding data length according to the priority and/or the importance level of the at least one flow; or
retaining or discarding data of a corresponding data length according to the priority and/or the importance level of the at least one flow.

To accurately determine data that can be discarded in different load states or different levels of the load state, or to perform data scheduling and/or data discarding according to a first indication, in an embodiment, the method further includes at least one of the following:
receiving a first indication delivered by a second network device, wherein the first indication is used to indicate at least one of the following: a load state, a level of the load state, a data discarding corresponding rule, or a data retaining corresponding rule; or
determining at least one of the following: a load state, a level of a load state, a data discard timer duration, a priority and/or an importance level corresponding to data discarding, a data retaining length, or a data discarding length.

In this way, the first communication device can accurately determine data that can be discarded in different load states or different levels of the load state. The first indication may also be an indication of an importance level of a PDU set.

To improve flexibility for the first communication device in determining the load state, in an embodiment, the determining the load state includes at least one of the following:
obtaining a load state from an application server of the first communication device;
obtaining a load state indicated by a user experience indication;
determining a load state according to Quality of Experience (QoE) information; or
determining a load state according to an error rate and/or a channel quality condition.

An implementation method for performing data discarding on data of at least one flow is further described below with reference to examples.

In the case that the first communication device receives information on the importance level of a PDU set, and the importance level of the PDU set is divided into m1 levels, any one of methods A1 to C below may be used to perform data discarding and/or data scheduling on data of at least one flow. Here, the first communication device may obtain the information on the importance level of the PDU set through dedicated configuration of a network device, for example, configuration parameters of PDCP and/or RLC.

### Method A1

The priority and/or importance level of the data has a corresponding discard timer duration. The priority and/or importance level of the data and the discard timer duration may have a one-to-one correspondence, that is, if there are m1 levels of the priority and/or importance level of the data, there are m1 corresponding discard timer durations. The priority and/or importance level of the data and the discard timer duration may also have a many-to-one correspondence, that is, multiple priorities and/or importance levels of the data correspond to one timer duration; if there are m1 levels of the priority and/or importance level of the data, there are m2 corresponding timer durations (m2 is smaller than m1). This information may be indicated by an application layer of the first communication device to the first communication device and/or a network device side, and configured for the first communication device.

For example, when a no-load state is present, the discard timer duration is t0 for data of PDU sets with any importance level.

In a load state, the priority and/or importance level of the data and the discard timer duration have a one-to-one correspondence.

The discard timer duration corresponding to data of the PDU set with importance level o is t1;
the discard timer duration corresponding to data of the PDU set with importance level p is t2;
the discard timer duration corresponding to data of the PDU set with importance level q is t3;
the discard timer duration corresponding to data of the PDU set with importance level r is t4; and so on.

Alternatively, the correspondence between the priority and/or importance level of the data and the discard timer duration is many-to-one.

The discard timer duration corresponding to data of the PDU set with importance levels o, p, q, and r is t1;
the discard timer duration corresponding to data of the PDU set with importance levels s, t, u, and v is t2; and so on.

The letters in the present disclosure represent natural numbers greater than or equal to 1.

Then, the first communication device may determine a load state according to a first indication transmitted by a network device, or may determine a load state by itself. The first communication device then performs data scheduling and/or data discarding on data of at least one flow according to different discard timer durations corresponding to data in different load states. Specifically, in the case that the first communication device receives any data of the at least one flow, it may activate a discard timer according to the first indication or a status indication, and perform data scheduling and/or data discarding when the corresponding discard timer duration has elapsed, i.e., when the discard timer expires. Alternatively, in the case that the first communication device receives any data of the at least one flow, the first communication device may determine which importance level of a PDU set, or which importance levels of PDU sets, are to be discarded, according to a priority and/or an importance level of the load state indicated by the first indication or the status indication, and perform data scheduling and/or data discarding when the discard timer duration corresponding to the load state has elapsed. Here, the status indication may be load state information obtained by the first communication device itself.

In the case that the first communication device does not receive an indication of the importance level of a PDU set, it performs data discarding and/or data scheduling without distinguishing between the importance levels of PDU sets.

### Method A2

When the first communication device receives a first indication or a status indication, the first communication device correspondingly starts a discard timer, and determines a duration of the started discard timer (also referred to as a discard timer duration). The discard timer duration may be the same or different in different load states.

For example, data of the PDU set with importance level o starts a discard timer with a discard timer duration t1;
data of the PDU set with importance level p starts a discard timer with a discard timer duration t2;
data of the PDU set with importance level q starts a discard timer with a discard timer duration t3;
data of the PDU set with importance level r starts a discard timer with a discard timer duration t4.

The first communication device may also determine a corresponding load state according to the first indication or the status indication, and determine a discard timer duration corresponding to the load state. The discard timer duration may be different in different load states.

For example, when the load states are OL1, OL2, OL3, OL4, ..., OLm, the discard timer durations corresponding to data of the PDU set with importance level o are to1, to2, to3, to4, ..., tom, respectively;
when the load states are OL1, OL2, OL3, OL4, ..., OLm, the discard timer durations corresponding to data of the PDU set with importance level p are tp1, tp2, tp3, tp4, ..., tpm, respectively;
when the load states are OL1, OL2, OL3, OL4, ..., OLm, the discard timer durations corresponding to data of the PDU set with importance level q are tq1, tq2, tq3, tq4, ..., tqm, respectively;
when the load states are OL1, OL2, OL3, OL4, ..., OLm, the discard timer durations corresponding to data of the PDU set with importance level r are tr1, tr2, tr3, tr4, ..., trm, respectively; and so on.

The letters in the present disclosure represent natural numbers greater than or equal to 1.

As another example, according to different levels of the first indication or the status indication, the discard timer durations corresponding to data of the PDU set with importance level o are determined as to1, to2, to3, to4, ..., tom, respectively;
according to different levels of the first indication or the status indication, the discard timer durations corresponding to data of the PDU set with importance level p are determined as tp1, tp2, tp3, tp4, ..., tpm, respectively;
according to different levels of the first indication or the status indication, the discard timer durations corresponding to data of the PDU set with importance level q are determined as tq1, tq2, tq3, tq4, ..., tqm, respectively;
according to different levels of the first indication or the status indication, the discard timer durations corresponding to data of the PDU set with importance level r are determined as tr1, tr2, tr3, tr4, ..., trm, respectively; and so on.

The letters in the present disclosure represent natural numbers greater than or equal to 1.

The different levels of the first indication or the status indication in the present disclosure may be used to determine at least one of: a load state, a level of the load state, a data discard timer duration, a priority and/or an importance level corresponding to data discarding, a data retaining length, or a data discard length.

Then, in the case that the first communication device determines a discard timer duration corresponding to an importance level of data, the first communication device performs data scheduling and/or data discarding on data of at least one flow according to the discard timer duration corresponding to the importance level of the data. Alternatively, in the case that the first communication device determines discard timer durations corresponding to importance levels of data in different load states, the first communication device performs data scheduling and/or data discarding on data of at least one flow according to different discard timer durations corresponding to data in different load states.

It should be noted that the first communication device may determine a load state according to a first indication transmitted by a network device (for example, an indication of an importance level of a PDU set), and the first communication device may also determine a load state by itself. In the case that the first communication device does not receive an indication of an importance level of a PDU set, the first communication device uses a discard timer duration of t0.

A method by which the first communication device determines a load state by itself may include at least one of the following:
obtaining a load state from an application server of the first communication device;
the first communication device obtaining a load state indicated by a user experience indication;
the first communication device deriving a load state according to QoE information; or
the first communication device inferring a load state according to an error rate (for example, packet error rate or block error rate) and/or a channel quality condition.

### Method B

The first communication device obtains a load state according to a first indication or a status indication, and discards data of a priority and/or importance level corresponding to the load state in different load states. For example,
in a load state OL1, data of a PDU set with importance levels o and p is discarded;
in a load state OL2, data of the PDU set with importance levels q and r is discarded;
   ...
in a load state OLm, data of the PDU set with importance levels y and z is discarded.

When the first communication device does not receive an indication of the importance level of the PDU set and a discard timer does not expire, data is not discarded.

Alternatively, in different load states of the first communication device, data of a priority and/or importance level corresponding to the load state is discarded. For example,
according to a level one of the first indication or the status indication, data of the PDU set with importance levels o and p is discarded;
according to a level two of the first indication or the status indication, and the load state is OL2, data of the PDU set with importance levels q and r is discarded;
   ...
according to a level m of the first indication or the status indication, data of the PDU set with importance levels y and z is discarded.

Different levels of the first indication or the status indication in this description may be used to determine at least one of: a load state, a level of the load state, a data discard timer duration, a priority and/or an importance level corresponding to data discarding, a data retaining length, or a data discarding length.

It should be noted that a network device may determine a load condition or a load state according to channel quality reported by the first communication device and/or according to an L2 buffer reporting condition.

The load state that can be acquired or obtained by the network device is in a granularity of a Data Radio Bearer (DRB). That is, the load state is a load state per DRB.

### Method C

The first communication device may obtain a load state according to a first indication or a status indication; in the load state, data of a data length corresponding to a priority and/or an importance level is retained or discarded. For example, in the load state,
for data with a priority a, data of a length s1 is retained or data of a length s2 is discarded;
for data with a priority b, data of a length s3 is retained or data of a length s4 is discarded;
for data with a priority c, data of a length s5 is retained or data of a length s6 is discarded.

The letters in the present disclosure represent natural numbers greater than or equal to 1.

### Method C2

The first communication device may obtain a load state according to a first indication or a status indication; in different load states, a data length corresponding to a priority and/or an importance level is retained or discarded. For example,
when the load state is OL1, for data with a priority a, data of a length s1 is retained or data of a length s2 is discarded;
when the load state is OLm, for data with a priority a, data of a length s1m is retained or data of a length s2m is discarded;
when the load state is OL1, for data with a priority b, data of a length s3 is retained or data of a length s4 is discarded;
when the load state is OLm, for data with a priority b, data of a length s3m is retained or data of a length s4m is discarded;
when the load state is OL1, for data with a priority c, data of a length s5 is retained or data of a length s6 is discarded;
when the load state is OLm, for data with a priority c, data of a length s5m is retained or data of a length s6m is discarded.

The load state may be determined according to a first indication transmitted by a network device or may be determined by the first communication device itself.

Alternatively,
according to level one of the first indication or the status indication, for data with a priority a, data of a length s1 is retained or data of a length s2 is discarded;
according to level m of the first indication or the status indication, for data with a priority a, data of a length s1m is retained or data of a length s2m is discarded;
according to level one of the first indication or the status indication, for data with a priority b, data of a length s3 is retained or data of a length s4 is discarded;
according to level m of the first indication or the status indication, for data with a priority b, data of a length s3m is retained or data of a length s4m is discarded;
according to level one of the first indication or the status indication, for data with a priority c, data of a length s5 is retained or data of a length s6 is discarded;
according to level m of the first indication or the status indication, for data with a priority c, data of a length s5m is retained or data of a length s6m is discarded.

The different levels of the first indication or the status indication in the present disclosure may be used to determine at least one of the following: a load state, a level of the load state, a data discard timer duration, a priority and/or an importance level corresponding to data discarding, a data retaining length, or a data discarding length.

It should be noted that the network device may determine a load condition or a load state according to channel quality reported by the first communication device and/or an L2 buffer reporting condition.

The load state that can be acquired or obtained by the network device is in a granularity of a Data Radio Bearer (DRB). That is, the load state is a load state per DRB.

It should be noted that, in the case that the network device has determined the load state, it transmits a first indication to the first communication device to inform the first communication device of the transmission capability of the network device for the current and/or a future period of time, or the data length that can currently be stored in the buffer of the first communication device. The parameters may be in at least one of the following granularities:
the first communication device, a DRB (where the DRB enables the first communication device to accurately perform data scheduling or discarding functions), a PDU set, a QoS flow, a PDU session, a logical channel, a logical channel group, or a data flow.

In the case that the first communication device receives the first indication transmitted by the network device, it may first discard low-priority data according to the data length that can currently be stored in the buffer of the first communication device.

Alternatively, in the case that the first communication device receives the first indication transmitted by the network device, it may perform data discarding according to the data length that can currently be stored in the buffer of the first communication device, in an order from low priority to high priority and based on the data length corresponding to each priority (similar to the flow of people entering a subway).

For example, for data with a priority a, data of a length s1 is retained or data of a length s2 is discarded;
for data with a priority b, data of a length s3 is retained or data of a length s4 is discarded;
for data with a priority c, data of a length s5 is retained or data of a length s6 is discarded; and so on.

Furthermore, after receiving the first indication, the first communication device (e.g., a terminal) may further perform at least one of the following operations according to the first indication.
I. In the case that the first indication carries a validity time or a duration,
   the first communication device performs corresponding data discarding and/or scheduling processing according to the validity time or the duration carried in the first indication.
II. After receiving the first indication, the first communication device performs data discarding and/or data retaining corresponding to a priority and/or an importance level according to a rule corresponding to the first indication, and then resumes data discarding operations under a normal load. When the first communication device receives the first indication again, it performs data discarding and/or data retaining corresponding to a priority and/or an importance level according to a rule corresponding to the first indication received again, and then resumes data discarding operations under a normal load. Alternatively, when the first communication device receives the first indication again, it performs data discarding and/or data retaining corresponding to a priority and/or an importance level according to a rule corresponding to the first indication received again, with an operation duration extended by T1, and then resumes data discarding operations under a normal load. When the first communication device receives the first indication for a third time, it performs data discarding and/or data retaining corresponding to a priority and/or an importance level according to a rule corresponding to the first indication received for the third time, with an operation duration extended by 2×T1, and then resumes data discarding operations under a normal load.
III. After the first communication device receives the first indication, it continuously performs data discarding and/or data retaining corresponding to a priority and/or an importance level according to a rule corresponding to the first indication, until an indication of a normal load state is obtained, and then resumes data discarding operations in a normal load state.

In the present disclosure, the first indication may be a level indication indicating a load level, a level indication of a discard timer duration, or a level indication for data length retaining/discarding.

This information may be used by the first communication device to determine a duration for data discarding and/or scheduling.

Furthermore, after performing data discarding, the first communication device may transmit information related to the discarded data to a second communication device. The information related to the discarded data includes at least one of the following:
a sequence number of first discarded data;
a number of discarded data;
a sequence number of first data in a discarded PDU set;
an indication of whether the discarded data is consecutive;
an indication of whether the discarded data is within one PDU set;
an indication of whether a PDU set to which the discarded data belongs needs to perform an integrity operation;
a sequence number of the discarded data;
a sequence number of one or more PDU sets to which the discarded data belongs;
a sequence number of the discarded data within its PDU set;
a sequence number of first discarded data within its PDU set;
a sequence number of last discarded data within its PDU set; or
a reason for discarding the data.

Additionally, after performing the above data discarding behavior, the first communication device periodically requests fifth information from the second communication device. The fifth information may specifically be at least one of the following: a load recovery indication, a discard timer duration adjustment indication, or a buffer data length indication.

The second communication device replies to the first communication device with at least one of the following information according to a load state: a current load state, discard timer duration adjustment indication, or buffer data length indication.

Then, the first communication device may adjust a data discarding mechanism according to at least one of a latest load state, the discard timer duration adjustment indication, or the buffer data length indication.

Furthermore, when the first communication device performs the above data discarding mechanism for the first time, it starts a timer. When at least one of the following situations occurs before the timer expires, the first communication device performs neighbor cell measurement and/or a handover procedure:
the current load state is higher than a threshold L;
the discard timer duration is shorter than a threshold T; or
the buffer data length information is shorter than a threshold L.

It should be noted that different application-layer encoding policies lead to different processing (data discarding) for different types of frames.

Correspondingly, an embodiment of the present application further provides a data scheduling method, applied to a second communication device. The second communication device includes a network device, and the network device includes a base station. As shown in FIG. 4, the method includes:
step 401: delivering first information to a first communication device, wherein the first information is used to indicate an association relationship between data of at least one flow.

To enable the first communication device to perform cooperative processing of data that have an association relationship, in an embodiment, the association relationship includes at least one of the following:
Quality of Service (QoS) coordination;
time synchronization;
belonging to one QoS flow;
belonging to one Protocol Data Unit (PDU) set;
belonging to one radio bearer; or
belonging to one application server; wherein
the QoS coordination indicates that values of QoS parameters are identical, or a difference between the QoS parameters is less than or equal to a predetermined threshold; and
the QoS parameter includes at least one of a packet error rate, latency, jitter, or reliability.

To expand application scenarios for cooperative processing of data that have an association relationship, in an embodiment, the at least one flow includes at least one of the following:
a service;
a PDU session;
a QoS flow;
a service data flow;
a radio bearer;
a logical channel;
a PDU set;
a PDU;
a sampling flow;
a slice; or
a tile.

To enable the first communication device to perform cooperative processing of data of QoS flows, in an embodiment, QoS Identifiers (QFIs) corresponding to different flows in the at least one flow are different or the same

To save and reduce radio resources occupied by data of the at least one flow that has the association relationship and to meet a requirement for cooperative transmitting of the data, in an embodiment, data of the at least one flow is carried in a same TB or is carried in a transmission resource indicated by a same UL grant.

In the case that data of the at least one flow is carried in the same TB or is carried in a transmission resource indicated by the same UL grant, the at least one flow that has the association relationship may be determined by the second communication device. Based on this, in an embodiment, the method further includes:
delivering second information and/or third information to the first communication device, wherein
the second information is used to indicate a flow that is allowed to transmit data by using the same TB and/or the transmission resource indicated by the same UL grant, and the third information is used to indicate a transmission configuration when transmitting data of different flows by using the same TB and/or the transmission resource indicated by the same UL grant.

Here, the second communication device may determine flows that are allowed to transmit data by using the same TB or the transmission resource indicated by the same UL grant, generate second information according to the determined flow information, and deliver the second information to the first communication device. The second communication device may also deliver third information to the first communication device. The first communication device may be a network node capable of communicating with a network device, for example, a terminal, a core network node, or the like.

The second information configured by the network device for the first communication device may be carried in an RRC signaling, and/or an MAC signaling.

To facilitate the first communication device in determining logical channels that have an association relationship, in an embodiment, the second information includes at least one of the following:
information indicating at least one logical channel that is allowed to transmit data by using the same TB;
information indicating at least one logical channel that is allowed to transmit data by using the transmission resource indicated by the same UL grant;
information indicating an associated priority of at least one logical channel that is allowed to transmit data by using the same TB; or
information indicating an associated priority of at least one logical channel that is allowed to transmit data by using the transmission resource indicated by the same UL grant.

In an embodiment, the third information is used to indicate at least one of the following:
a number of bytes occupied in the same TB by data of different flows;
a Modulation and Coding Scheme (MCS) used by data of different flows;
a transmission resource occupied, in the transmission resource indicated by the same UL grant, by data of different flows;
a Subcarrier Spacing (SCS) used when transmitting data of different flows by using the transmission resource indicated by the same UL grant; or
a duration of a Physical Uplink Shared Channel (PUSCH) used when transmitting data of different flows by using the transmission resource indicated by the same UL grant.

Optionally, in the case that the first communication device is a network node capable of communicating with a network device, the data of the at least one flow is carried in different TBs, and the different TBs are transmitted in a same time segment; or the data of the at least one flow is carried in different carriers, and the different carriers are transmitted in a same time segment.

In the foregoing solution, the first communication device may cooperatively transmit data that have an association relationship, so as to meet a cooperative processing requirement between XR services.

To implement the data scheduling method according to the embodiments of the present application, an embodiment of the present application further provides a data scheduling apparatus, which is disposed on a first communication device. As shown in FIG. 5, the apparatus includes:
a first transceiver unit 501, configured to transmit or receive data of at least one flow, wherein there is an association relationship between data of the at least one flow.

In an embodiment, the association relationship includes at least one of the following:
Quality of Service (QoS) coordination;
time synchronization;
belonging to one QoS flow;
belonging to one Protocol Data Unit (PDU) set;
belonging to one radio bearer; or
belonging to one application server; wherein
the QoS coordination indicates that values of QoS parameters are identical, or a difference between the QoS parameters is less than or equal to a predetermined threshold; and the QoS parameter includes at least one of a packet error rate, latency, jitter, or reliability.

In an embodiment, the at least one flow includes at least one of the following:
a service;
a PDU session;
a QoS flow;
a service data flow;
a radio bearer;
a logical channel;
a PDU set;
a PDU;
a sampling flow;
a slice; or
a tile.

In an embodiment, the apparatus further includes:
a third transceiver unit, configured to receive first information delivered by a second communication device, wherein the first information is used to indicate an association relationship between the data of the at least one flow.

In an embodiment, the data of the at least one flow is carried in a same TB or is carried in a transmission resource indicated by a same UL grant.

In an embodiment, the apparatus further includes:
a fourth transceiver unit, configured to receive second information and/or third information delivered by a second communication device, wherein
the second information is used to indicate a flow that is allowed to transmit data by using the same TB and/or the transmission resource indicated by the same UL grant, and the third information is used to indicate a transmission configuration when transmitting data of different flows by using the same TB and/or the transmission resource indicated by the same UL grant.

In an embodiment, the second information includes at least one of the following:
information indicating at least one logical channel that is allowed to transmit data by using the same TB;
information indicating at least one logical channel that is allowed to transmit data by using the transmission resource indicated by the same UL grant;
information indicating an associated priority of at least one logical channel that is allowed to transmit data by using the same TB; or
information indicating an associated priority of at least one logical channel that is allowed to transmit data by using the transmission resource indicated by the same UL grant.

In an embodiment, the first transceiver unit 501 is specifically configured to transmit, via a first UL grant, data of at least one logical channel that is allowed to be transmitted by using the same TB as indicated by the second information, under a condition that the following are satisfied:
the second information includes information indicating a logical channel that is allowed to use the same TB to transmit data; and
content of fourth information corresponding to the first UL grant is consistent with or does not conflict with content of the third information;
wherein the fourth information includes information of a logical channel that is allowed to transmit for the UL grant.

In an embodiment, the fourth transceiver unit is further configured to transmit a Buffer Status Report (BSR) to the second communication device; wherein content of the BSR may include at least one of the following:
an indication that there is an association relationship between a first logical channel and a second logical channel;
a type of an association relationship between a first logical channel and a second logical channel;
buffer data sizes respectively corresponding to a first logical channel and a second logical channel;
buffer data sizes of logical channel groups respectively corresponding to a first logical channel and a second logical channel;
a sum of buffer data sizes of a first logical channel and a second logical channel;
a sum of buffer data sizes of logical channel groups respectively corresponding to a first logical channel and a second logical channel;
Identifiers (IDs) of a first logical channel and a second logical channel that have an association relationship;
IDs of logical channel groups respectively corresponding to a first logical channel and a second logical channel that have an association relationship; or
IDs of the first communication devices respectively corresponding to a first logical channel and a second logical channel that have an association relationship, wherein the first logical channel and the second logical channel respectively belong to different first communication devices.

In an embodiment, the apparatus further includes:
a determining unit, configured to determine an association relationship between the data of the at least one flow according to the second information.

In an embodiment, the third information is used to indicate at least one of the following:
a number of bytes occupied in the same TB by data of different flows;
a Modulation and Coding Scheme (MCS) used by data of different flows;
a transmission resource occupied, in the transmission resource indicated by the same UL grant, by data of different flows;
a Subcarrier Spacing (SCS) used when transmitting data of different flows by using the transmission resource indicated by the same UL grant; or
a duration of a Physical Uplink Shared Channel (PUSCH) used when transmitting data of different flows by using the transmission resource indicated by the same UL grant.

In an embodiment, the at least one flow includes a first flow and a second flow that has an association relationship; the first transceiver unit is specifically configured to perform at least one of the following:
in the case that a number of bytes of data of the second flow is less than and/or equal to a first threshold, transmitting data of the second flow by puncturing data of the first flow; or
in the case that a number of bytes of data of the second flow is greater than and/or equal to the first threshold, transmitting data of the first flow and data of the second flow by using the same TB or the transmission resource indicated by the same UL grant.

In an embodiment, QoS Identifiers (QFIs) corresponding to different flows in the at least one flow are different or the same.

In an embodiment, the data of the at least one flow is carried in different TBs, and the different TBs are transmitted in a same time segment; or the data of the at least one flow is carried in different carriers, and the different carriers are transmitted in a same time segment.

In an embodiment, the apparatus further includes:
a discarding unit, configured to perform data discarding and/or data scheduling on the data of the at least one flow according to a priority and/or an importance level corresponding to the at least one flow.

In an embodiment, the discarding unit is specifically configured to perform at least one of the following:
in a load state, performing data discarding on the data of the at least one flow according to a discard timer duration corresponding to the priority and/or the importance level of the at least one flow;
performing data discarding on the data of the at least one flow according to a discard timer duration corresponding to the priority and/or the importance level of the at least one flow in a level of the load state;
in a load state, performing data discarding on the data of the at least one flow according to a discard timer corresponding to the priority and/or the importance level of the at least one flow;
discarding data of a corresponding priority and/or importance level of a flow according to a level of the load state;
in a load state, retaining or discarding data of a corresponding data length according to the priority and/or the importance level of the at least one flow;
retaining or discarding data of a corresponding data length according to the priority and/or the importance level of the at least one flow; or
retaining or discarding data of a corresponding data length in a level of the load state according to the priority and/or the importance level of the at least one flow.

In an embodiment, the discarding unit is specifically configured to perform at least one of the following:
determining, according to a first indication, a discard timer duration corresponding to the priority and/or the importance level of the at least one flow, and performing data discarding on the data of the at least one flow according to the determined discard timer duration;
determining, according to a first indication, a discard timer corresponding to the priority and/or the importance level of the at least one flow, and performing data discarding on the data of the at least one flow according to the determined discard timer duration;
discarding data corresponding to the priority and/or the importance level of a flow according to a first indication;
determining, according to a first indication, the priority and/or the importance level of the at least one flow, and retaining or discarding data of a corresponding data length according to the priority and/or the importance level of the at least one flow; or
retaining or discarding data of a corresponding data length according to the priority and/or the importance level of the at least one flow.

In an embodiment, the apparatus further includes an obtaining unit configured to perform at least one of the following:
receive a first indication delivered by a second network device, wherein the first indication is used to indicate at least one of the following: a load state, a level of the load state, a data discarding corresponding rule, or a data retaining corresponding rule; or
determine at least one of the following: a load state, a level of a load state, a data discard timer duration, a priority and/or an importance level corresponding to data discarding, a data retaining length, or a data discarding length.

In an embodiment, the obtaining unit is specifically configured to perform at least one of the following:
obtaining a load state from an application server of the first communication device;
obtaining a load state indicated by a user experience indication;
determining a load state according to Quality of Experience (QoE) information; or
determining a load state according to an error rate and/or a channel quality condition.

In practical applications, the first transceiver unit 501, the third transceiver unit, the fourth transceiver unit, and the obtaining unit may be implemented by a processor in a data scheduling apparatus in conjunction with a communication interface, and the determining unit and the discarding unit may be implemented by the processor in the data scheduling apparatus.

To implement the data scheduling method according to embodiments of the present application, an embodiment of the present application further provides a data scheduling apparatus, disposed on a second communication device. As shown in FIG. 6, the apparatus includes:
a second transceiver unit 601, configured to deliver first information to a first communication device, wherein the first information is used to indicate an association relationship between data of at least one flow.

In an embodiment, data of the at least one flow is carried in the same TB or is carried in a transmission resource indicated by the same UL grant.

In an embodiment, the apparatus further includes:
a fifth transceiver unit, configured to deliver second information and/or third information to the first communication device, wherein
the second information is used to indicate a flow that is allowed to transmit data by using the same TB and/or the transmission resource indicated by the same UL grant, and the third information is used to indicate a transmission configuration when transmitting data of different flows by using the same TB and/or the transmission resource indicated by the same UL grant.

In an embodiment, the second information includes at least one of the following:
information indicating at least one logical channel that is allowed to transmit data by using the same TB;
information indicating at least one logical channel that is allowed to transmit data by using the transmission resource indicated by the same UL grant;
information indicating an associated priority of at least one logical channel that is allowed to transmit data by using the same TB; or
information indicating an associated priority of at least one logical channel that is allowed to transmit data by using the transmission resource indicated by the same UL grant.

In an embodiment, the third information is used to indicate at least one of the following:
a number of bytes occupied in the same TB by data of different flows;
a Modulation and Coding Scheme (MCS) used by data of different flows;
a transmission resource occupied, in the transmission resource indicated by the same UL grant, by data of different flows;
a Subcarrier Spacing (SCS) used when transmitting data of different flows by using the transmission resource indicated by the same UL grant; or
a duration of a Physical Uplink Shared Channel (PUSCH) used when transmitting data of different flows by using the transmission resource indicated by the same UL grant.

In an embodiment, the association relationship includes at least one of the following:
Quality of Service (QoS) coordination;
time synchronization;
belonging to one QoS flow;
belonging to one Protocol Data Unit (PDU) set;
belonging to one radio bearer; or
belonging to one application server; wherein
the QoS coordination indicates that values of QoS parameters are identical, or a difference between the QoS parameters is less than or equal to a predetermined threshold; and the QoS parameter includes at least one of a packet error rate, latency, jitter, or reliability.

In an embodiment, the at least one flow includes at least one of the following:
a service;
a PDU session;
a QoS flow;
a service data flow;
a radio bearer;
a logical channel;
a PDU set;
a PDU;
a sampling flow;
a slice; or
a tile.

In an embodiment, QoS Identifiers (QFIs) corresponding to different flows in the at least one flow are different.

In practical application, the second transceiver unit 601 and the fifth transceiver unit may be implemented by a processor in a data scheduling apparatus in conjunction with a communication interface.

It should be noted that when performing data scheduling, the data scheduling apparatus provided in the foregoing embodiments is only described by way of example based on the division of the above program modules. In practical applications, the processing described above may be allocated to different program modules as needed; that is, an internal structure of the apparatus may be divided into different program modules to accomplish all or part of the processing described above. In addition, the data scheduling apparatus and the data scheduling method embodiments provided in the foregoing embodiments share the same concept, and the specific implementation processes are detailed in the method embodiments, which will not be repeated here.

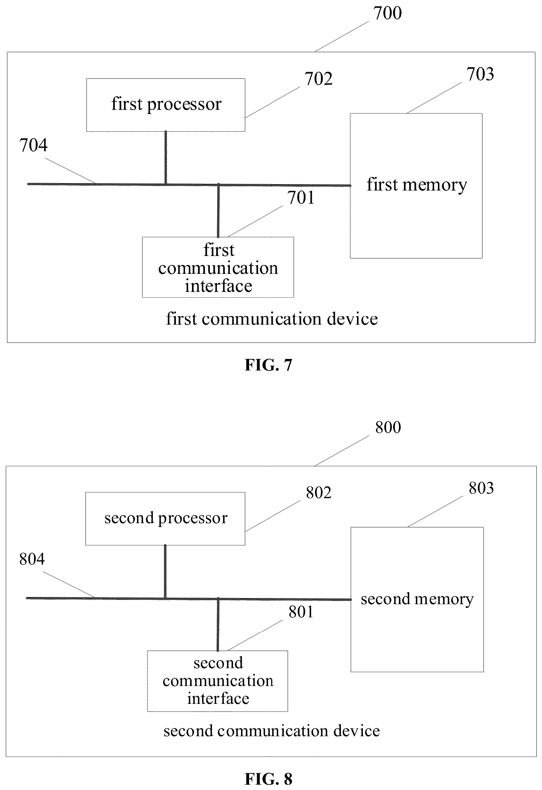

Based on the hardware implementation of the foregoing program modules and to implement the method on the first communication device side according to the embodiments of the present application, an embodiment of the present application further provides a first communication device. As shown in FIG. 7, the first communication device 700 includes:
a first communication interface 701, capable of exchanging information with other network nodes;
a first processor 702, connected to the first communication interface 701 to exchange information with other network nodes, configured to execute a computer program to implement the method provided by one or more technical solutions on the first communication device side, wherein the computer program is stored in a first memory 703.

Specifically, the first communication interface 701 is configured to transmit or receive data of at least one flow, wherein there is an association relationship between the data of the at least one flow.

In an embodiment,
the association relationship includes at least one of the following:
Quality of Service (QoS) coordination;
time synchronization;
belonging to one QoS flow;
belonging to one Protocol Data Unit (PDU) set;
belonging to one radio bearer; or
belonging to one application server; wherein
the QoS coordination indicates that values of QoS parameters are identical, or a difference between the QoS parameters is less than or equal to a predetermined threshold; and the QoS parameter includes at least one of a packet error rate, latency, jitter, or reliability.

In an embodiment, the at least one flow includes at least one of the following:
a service;
a PDU session;
a QoS flow;
a service data flow;
a radio bearer;
a logical channel;
a PDU set;
a PDU;
a sampling flow;
a slice; or
a tile.

In an embodiment, the first communication interface 701 is further configured to receive first information delivered by a second communication device, wherein the first information is used to indicate an association relationship between data of the at least one flow.

In an embodiment, the data of the at least one flow is carried in a same TB or is carried in a transmission resource indicated by a same UL grant.

In an embodiment, the first communication interface 701 is further configured to receive second information and/or third information delivered by a second communication device, wherein
the second information is used to indicate a flow that is allowed to transmit data by using the same TB and/or the transmission resource indicated by the same UL grant, and the third information is used to indicate a transmission configuration when transmitting data of different flows by using the same TB and/or the transmission resource indicated by the same UL grant.

In an embodiment, the second information includes at least one of the following:
information indicating at least one logical channel that is allowed to transmit data by using the same TB;
information indicating at least one logical channel that is allowed to transmit data by using the transmission resource indicated by the same UL grant;
information indicating an associated priority of at least one logical channel that is allowed to transmit data by using the same TB; or
information indicating an associated priority of at least one logical channel that is allowed to transmit data by using the transmission resource indicated by the same UL grant.

In an embodiment, the first communication interface 701 is specifically configured to transmit, via a first UL grant, data of at least one logical channel that is allowed to be transmitted by using the same TB as indicated by the second information, under a condition that the following are satisfied:
the second information includes information indicating a logical channel that is allowed to use the same TB to transmit data; and
content of fourth information corresponding to the first UL grant is consistent with or does not conflict with content of the third information;
wherein the fourth information includes information of a logical channel that is allowed to transmit for the UL grant.

In an embodiment, the first communication interface 701 is further configured to transmit a Buffer Status Report (BSR) to the second communication device; wherein content of the BSR may include at least one of the following:
an indication that there is an association relationship between a first logical channel and a second logical channel;
a type of an association relationship between a first logical channel and a second logical channel;
buffer data sizes respectively corresponding to a first logical channel and a second logical channel;
buffer data sizes of logical channel groups respectively corresponding to a first logical channel and a second logical channel;
a sum of buffer data sizes of a first logical channel and a second logical channel;
a sum of buffer data sizes of logical channel groups respectively corresponding to a first logical channel and a second logical channel;
Identifiers (IDs) of a first logical channel and a second logical channel that have an association relationship;
IDs of logical channel groups respectively corresponding to a first logical channel and a second logical channel that have an association relationship; or
IDs of the first communication devices respectively corresponding to a first logical channel and a second logical channel that have an association relationship, wherein the first logical channel and the second logical channel respectively belong to different first communication devices.

In an embodiment, the first processor 702 is configured to determine an association relationship between the data of the at least one flow according to the second information.

In an embodiment, the third information is used to indicate at least one of the following:
a number of bytes occupied in the same TB by data of different flows;
a Modulation and Coding Scheme (MCS) used by data of different flows;
a transmission resource occupied, in the transmission resource indicated by the same UL grant, by data of different flows;
a Subcarrier Spacing (SCS) used when transmitting data of different flows by using the transmission resource indicated by the same UL grant; or
a duration of a Physical Uplink Shared Channel (PUSCH) used when transmitting data of different flows by using the transmission resource indicated by the same UL grant.

In an embodiment, the at least one flow includes a first flow and a second flow that has an association relationship; the first transceiver unit is specifically configured to perform at least one of the following:
in the case that a number of bytes of data of the second flow is less than and/or equal to a first threshold, transmitting data of the second flow by puncturing data of the first flow; or
in the case that a number of bytes of data of the second flow is greater than and/or equal to the first threshold, transmitting data of the first flow and data of the second flow by using the same TB or the transmission resource indicated by the same UL grant.

In an embodiment, QoS Identifiers (QFIs) corresponding to different flows in the at least one flow are different or the same.

In an embodiment, the data of the at least one flow is carried in different TBs, and the different TBs are transmitted in a same time segment; or the data of the at least one flow is carried in different carriers, and the different carriers are transmitted in a same time segment.

In an embodiment, the first processor 702 is further configured to perform data discarding and/or data scheduling on the data of the at least one flow according to a priority and/or an importance level corresponding to the at least one flow.

In an embodiment, the first processor 702 is specifically configured to perform at least one of the following:
in a load state, performing data discarding on the data of the at least one flow according to a discard timer duration corresponding to the priority and/or the importance level of the at least one flow;
performing data discarding on the data of the at least one flow according to a discard timer duration corresponding to the priority and/or the importance level of the at least one flow in a level of the load state;
in a load state, performing data discarding on the data of the at least one flow according to a discard timer corresponding to the priority and/or the importance level of the at least one flow;
discarding data of a corresponding priority and/or importance level of a flow according to a level of the load state;
in a load state, retaining or discarding data of a corresponding data length according to the priority and/or the importance level of the at least one flow;
retaining or discarding data of a corresponding data length according to the priority and/or the importance level of the at least one flow; or
retaining or discarding data of a corresponding data length in a level of the load state according to the priority and/or the importance level of the at least one flow.

In an embodiment, the first processor 702 is specifically configured to perform at least one of the following:
determining, according to a first indication, a discard timer duration corresponding to the priority and/or the importance level of the at least one flow, and performing data discarding on the data of the at least one flow according to the determined discard timer duration;
determining, according to a first indication, a discard timer corresponding to the priority and/or the importance level of the at least one flow, and performing data discarding on the data of the at least one flow according to the determined discard timer duration;
discarding data corresponding to the priority and/or the importance level of a flow according to a first indication;
determining, according to a first indication, the priority and/or the importance level of the at least one flow, and retaining or discarding data of a corresponding data length according to the priority and/or the importance level of the at least one flow; or
retaining or discarding data of a corresponding data length according to the priority and/or the importance level of the at least one flow.

In an embodiment, the first communication interface 701 is further configured to receive a first indication delivered by a second network device, wherein the first indication is used to indicate at least one of the following: a load state, a level of the load state, a data discarding corresponding rule, or a data retaining corresponding rule.

The first processor 702 is further configured to determine at least one of the following: a load state, a level of a load state, a data discard timer duration, a priority and/or an importance level corresponding to data discarding, a data retaining length, or a data discarding length.

In an embodiment, the first processor 702 is specifically configured to perform at least one of the following:
obtaining a load state from an application server of the first communication device;
obtaining a load state indicated by a user experience indication;
determining a load state according to Quality of Experience (QoE) information; or
determining a load state according to an error rate and/or a channel quality condition.

It should be noted that specific processing procedures of the first processor 702 and the first communication interface 701 may be understood with reference to the foregoing method.

Obviously, in practical application, the various components within the first communication device 700 are coupled together via a bus system 704. It may be understood that the bus system 704 is used to implement connection and communication between these components. In addition to a data bus, the bus system 704 further includes a power bus, a control bus, and a status signal bus. However, for clarity of illustration, various buses are all denoted as the bus system 704 in FIG. 7.

The first memory 703 in the embodiments of the present application is used to store various types of data to support operation of the first communication device 700. Examples of such data include any computer program executable by the first communication device 700.

The method disclosed in the foregoing embodiments of the present application may be applied to the first processor 702 or implemented by the first processor 702. The first processor 702 may be an integrated circuit chip with signal processing capability. During implementation, each step of the foregoing method may be completed by an integrated logic circuit of hardware in the first processor 702 or by instructions in the form of software. The first processor 702 may be a general-purpose processor, a Digital Signal Processor (DSP), or another programmable logic device, discrete gate or transistor logic device, discrete hardware component, etc. The first processor 702 may implement or execute the methods, steps, and logic block diagrams disclosed in the embodiments of the present application. A general-purpose processor may be a microprocessor or any conventional processor. Combined with the steps of the method disclosed in the embodiments of the present application, the steps may be directly embodied as being executed and completed by a hardware decoding processor, or executed and completed by a combination of hardware and software modules in the decoding processor. A software module may be located in a storage medium, which is located in the first memory 703. The first processor 702 reads information from the first memory 703 and completes the steps of the foregoing method in combination with its hardware.

In an exemplary embodiment, the first communication device 700 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general-purpose processors, controllers, Micro Controller Units (MCUs), Microprocessors, or other electronic components to execute the foregoing method.

Based on the hardware implementation of the foregoing program modules and to implement the method on the second communication device side according to the embodiments of the present application, an embodiment of the present application further provides a second communication device. As shown in FIG. 8, the second communication device 800 includes:
a second communication interface 801, capable of exchanging information with other network nodes;
a second processor 802, connected to the second communication interface 801 to exchange information with other network nodes, configured to execute a computer program to implement the method provided by one or more technical solutions on the second communication device side, wherein the computer program is stored in a second memory 803.

Specifically, the second communication interface 801 is configured to deliver first information to a first communication device, wherein the first information is used to indicate an association relationship between data of at least one flow.

In an embodiment, the data of the at least one flow is carried in the same TB or is carried in a transmission resource indicated by the same UL grant.

In an embodiment, the second communication interface 801 is further configured to deliver second information and/or third information to the first communication device, wherein
the second information is used to indicate a flow that is allowed to transmit data by using the same TB and/or the transmission resource indicated by the same UL grant, and the third information is used to indicate a transmission configuration when transmitting data of different flows by using the same TB and/or the transmission resource indicated by the same UL grant.

In an embodiment, the second information includes at least one of the following:
information indicating at least one logical channel that is allowed to transmit data by using the same TB;
information indicating at least one logical channel that is allowed to transmit data by using the transmission resource indicated by the same UL grant;
information indicating an associated priority of at least one logical channel that is allowed to transmit data by using the same TB; or
information indicating an associated priority of at least one logical channel that is allowed to transmit data by using the transmission resource indicated by the same UL grant.

In an embodiment, the third information is used to indicate at least one of the following:
a number of bytes occupied in the same TB by data of different flows;
a Modulation and Coding Scheme (MCS) used by data of different flows;
a transmission resource occupied, in the transmission resource indicated by the same UL grant, by data of different flows;
a Subcarrier Spacing (SCS) used when transmitting data of different flows by using the transmission resource indicated by the same UL grant; or
a duration of a Physical Uplink Shared Channel (PUSCH) used when transmitting data of different flows by using the transmission resource indicated by the same UL grant.

In an embodiment, the association relationship includes at least one of the following:
Quality of Service (QoS) coordination;
time synchronization;
belonging to one QoS flow;
belonging to one Protocol Data Unit (PDU) set;
belonging to one radio bearer; or
belonging to one application server; wherein
the QoS coordination indicates that values of QoS parameters are identical, or a difference between the QoS parameters is less than or equal to a predetermined threshold; and the QoS parameter includes at least one of a packet error rate, latency, jitter, or reliability.

In an embodiment, the at least one flow includes at least one of the following:
a service;
a PDU session;
a QoS flow;
a service data flow;
a radio bearer;
a logical channel;
a PDU set;
a PDU;
a sampling flow;
a slice; or
a tile.

In an embodiment, QoS Identifiers (QFIs) corresponding to different flows in the at least one flow are different or the same.

It should be noted that specific processing procedures of the second processor 802 and the second communication interface 801 may be understood with reference to the foregoing method.

Obviously, in practical applications, various components in the second communication device 800 are coupled together via a bus system 804. It can be understood that the bus system 804 is used to implement connection and communication between these components. In addition to a data bus, the bus system 804 further includes a power bus, a control bus, and a status signal bus. However, for clarity of illustration, various buses are all denoted as the bus system 804 in FIG. 8.

The second memory 803 in the embodiments of the present application is used to store various types of data to support operation of the second communication device 800. Examples of such data include any computer program executable by the second communication device 800.

The methods disclosed in the foregoing embodiments of the present application may be applied to the second processor 802 or implemented by the second processor 802. The second processor 802 may be an integrated circuit chip with signal processing capability. During implementation, each step of the foregoing method may be completed by an integrated logic circuit of hardware in the second processor 802 or by instructions in the form of software. The second processor 802 may be a general-purpose processor, a DSP, or another programmable logic device, discrete gate or transistor logic device, discrete hardware component, etc. The second processor 802 may implement or execute the methods, steps, and logic block diagrams disclosed in the embodiments of the present application. A general-purpose processor may be a microprocessor or any conventional processor. Combined with the steps of the method disclosed in the embodiments of the present application, the steps may be directly embodied as being executed and completed by a hardware decoding processor, or executed and completed by a combination of hardware and software modules in the decoding processor. A software module may be located in a storage medium, which is located in the second memory 803. The second processor 802 reads information from the second memory 803 and completes the steps of the foregoing method in combination with its hardware.

In an exemplary embodiment, the second communication device 800 may be implemented by one or more ASICs, DSPs, PLDs, CPLDs, FPGAs, general-purpose processors, controllers, MCUs, Microprocessors, or other electronic components to execute the foregoing method.

It may be understood that the memory (the first memory 703, the second memory 803) in the embodiments of the present application may be a volatile memory or a non-volatile memory, or may include both volatile and non-volatile memory. Here, the non-volatile memory may be a Read-Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a Flash Memory, a magnetic surface memory, an optical disc, or a Compact Disc Read-Only Memory (CD-ROM). The magnetic surface memory may be a disk memory or a tape memory. The volatile memory may be a Random Access Memory (RAM), which serves as an external high-speed cache. By way of example but not limitation, many forms of RAM are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), SyncLink Dynamic Random Access Memory (SLDRAM), or Direct Rambus Random Access Memory (DRRAM). The memory described in the embodiments of the present application is intended to include, but is not limited to, these and any other suitable types of memory.

In an exemplary embodiment, an embodiment of the present application further provides a storage medium, which is a computer storage medium, specifically a computer-readable storage medium. For example, the storage medium includes a first memory 703 storing a computer program, wherein the computer program may be executed by a first processor 702 of a first communication device 700 to complete the steps according to the aforementioned method on the first communication device side. As another example, the storage medium includes a second memory 803 storing a computer program, wherein the computer program may be executed by a second processor 802 of a second communication device 800 to complete the steps according to the aforementioned method on the second communication device side. The computer-readable storage medium may be a memory such as FRAM, ROM, PROM, EPROM, EEPROM, Flash Memory, magnetic surface memory, optical disc, or CD-ROM.

It should be noted that terms such as "first" and "second" are used to distinguish similar objects and do not necessarily describe a specific order or sequence.

In the present disclosure, the term "and/or" is merely a description of an association relationship between associated objects, indicating that three relationships may exist. For example, "A and/or B" may indicate: A alone, both A and B, or B alone. Furthermore, the term "at least one" in the present disclosure indicates any one of a plurality or any combination of at least two of a plurality. For example, "including at least one of A, B, or C" may indicate including any one or more elements selected from the set consisting of A, B, and C.

Additionally, the technical solutions described in the embodiments of the present application may be arbitrarily combined without conflict.

The above are merely preferred embodiments of the present application, and are not intended to limit the protection scope of the present application.

## Claims

1. A data scheduling method, applied to a first communication device, the method comprising:
transmitting or receiving data of at least one flow, wherein there is an association relationship between the data of the at least one flow.

2. The method according to claim 1, wherein the association relationship comprises at least one of the following:
Quality of Service (QoS) coordination;
time synchronization;
belonging to one QoS flow;
belonging to one Protocol Data Unit (PDU) set;
belonging to one radio bearer; or
belonging to one application server; wherein
the QoS coordination indicates that values of QoS parameters are identical, or a difference between the QoS parameters is less than or equal to a predetermined threshold; and the QoS parameter comprises at least one of a packet error rate, latency, jitter, or reliability.

3. The method according to claim 1, wherein the at least one flow comprises at least one of the following:
a service;
a PDU session;
a QoS flow;
a service data flow;
a radio bearer;
a logical channel;
a PDU set;
a PDU;
a sampling flow;
a slice; or
a tile.

4. The method according to claim 1, wherein the method further comprises:
receiving first information delivered by a second communication device, wherein the first information is used to indicate the association relationship between the data of the at least one flow.

5. The method according to claim 1, wherein the data of the at least one flow is carried in a same Transport Block (TB) or is carried in a transmission resource indicated by a same Uplink grant (UL grant).

6. The method according to claim 5, wherein the method further comprises:
receiving second information and/or third information delivered by a second communication device, wherein
the second information is used to indicate a flow that is allowed to transmit data by using the same TB and/or the transmission resource indicated by the same UL grant, and the third information is used to indicate a transmission configuration when transmitting data of different flows by using the same TB and/or the transmission resource indicated by the same UL grant.

7. The method according to claim 6, wherein the second information comprises at least one of the following:
information indicating at least one logical channel that is allowed to transmit data by using the same TB;
information indicating at least one logical channel that is allowed to transmit data by using the transmission resource indicated by the same UL grant;
information indicating an associated priority of at least one logical channel that is allowed to transmit data by using the same TB; or
information indicating an associated priority of at least one logical channel that is allowed to transmit data by using the transmission resource indicated by the same UL grant.

8. The method according to claim 6, wherein the transmitting the data of the at least one flow comprises:
transmitting, via a first UL grant, data of at least one logical channel that is allowed to be transmitted by using the same TB as indicated by the second information, under a condition that the following are satisfied:
the second information comprises information indicating a logical channel that is allowed to use the same TB to transmit data; and
content of fourth information corresponding to the first UL grant is consistent with or does not conflict with content of the third information;
wherein the fourth information comprises information of a logical channel that is allowed to transmit for the UL grant.

9. The method according to any one of claims 6 to 8, wherein the method further comprises:
determining the association relationship between the data of the at least one flow according to the second information.

10. The method according to claim 6, wherein the third information is used to indicate at least one of the following:
a number of bytes occupied in the same TB by data of different flows;
a Modulation and Coding Scheme (MCS) used by data of different flows;
a transmission resource occupied, in the transmission resource indicated by the same UL grant, by data of different flows;
a Subcarrier Spacing (SCS) used when transmitting data of different flows by using the transmission resource indicated by the same UL grant; or
a duration of a Physical Uplink Shared Channel (PUSCH) used when transmitting data of different flows by using the transmission resource indicated by the same UL grant.

11. The method according to claim 6, wherein before the transmitting the data of the at least one flow, the method further comprises:
transmitting a Buffer Status Report (BSR) to the second communication device; wherein content of the BSR may comprise at least one of the following:
an indication that there is an association relationship between a first logical channel and a second logical channel;
a type of an association relationship between a first logical channel and a second logical channel;
buffer data sizes respectively corresponding to a first logical channel and a second logical channel;
buffer data sizes of logical channel groups respectively corresponding to a first logical channel and a second logical channel;
a sum of buffer data sizes of a first logical channel and a second logical channel;
a sum of buffer data sizes of logical channel groups respectively corresponding to a first logical channel and a second logical channel;
Identifiers (IDs) of a first logical channel and a second logical channel that have an association relationship;
IDs of logical channel groups respectively corresponding to a first logical channel and a second logical channel that have an association relationship; or
IDs of the first communication devices respectively corresponding to a first logical channel and a second logical channel that have an association relationship, wherein the first logical channel and the second logical channel respectively belong to different first communication devices.

12. The method according to any one of claims 5 to 8, wherein the at least one flow comprises a first flow and a second flow that has an association relationship; and the transmitting the data of the at least one flow comprises at least one of the following:
in the case that a number of bytes of data of the second flow is less than and/or equal to a first threshold, transmitting data of the second flow by puncturing data of the first flow; or
in the case that a number of bytes of data of the second flow is greater than and/or equal to the first threshold, transmitting data of the first flow and data of the second flow by using the same TB or the transmission resource indicated by the same UL grant.

13. The method according to claim 1, wherein QoS Identifiers (QFIs) corresponding to different flows in the at least one flow are different or the same.

14. The method according to any one of claims 1 to 4, wherein the data of the at least one flow is carried in different TBs, and the different TBs are transmitted in a same time segment; or the data of the at least one flow is carried in different carriers, and the different carriers are transmitted in a same time segment.

15. The method according to any one of claims 1 to 3, wherein before the transmitting the data of the at least one flow, the method further comprises:
performing data discarding and/or data scheduling on the data of the at least one flow according to a priority and/or an importance level corresponding to the at least one flow.

16. The method according to claim 15, wherein the performing data discarding and/or data scheduling on the data of the at least one flow according to the priority and/or the importance level corresponding to the at least one flow comprises at least one of the following:
in a load state, performing data discarding on the data of the at least one flow according to a discard timer duration corresponding to the priority and/or the importance level of the at least one flow;
performing data discarding on the data of the at least one flow according to a discard timer duration corresponding to the priority and/or the importance level of the at least one flow in a level of the load state;
in a load state, performing data discarding on the data of the at least one flow according to a discard timer corresponding to the priority and/or the importance level of the at least one flow;
discarding data of a corresponding priority and/or importance level of a flow according to a level of the load state;
in a load state, retaining or discarding data of a corresponding data length according to the priority and/or the importance level of the at least one flow;
retaining or discarding data of a corresponding data length according to the priority and/or the importance level of the at least one flow; or
retaining or discarding data of a corresponding data length in a level of the load state according to the priority and/or the importance level of the at least one flow.

17. The method according to claim 15, wherein the performing data discarding and/or data scheduling on the data of the at least one flow according to the priority and/or the importance level corresponding to the at least one flow comprises at least one of the following:
determining, according to a first indication, a discard timer duration corresponding to the priority and/or the importance level of the at least one flow, and performing data discarding on the data of the at least one flow according to the determined discard timer duration;
determining, according to a first indication, a discard timer corresponding to the priority and/or the importance level of the at least one flow, and performing data discarding on the data of the at least one flow according to the determined discard timer duration;
discarding data corresponding to the priority and/or the importance level of a flow according to a first indication;
determining, according to a first indication, the priority and/or the importance level of the at least one flow, and retaining or discarding data of a corresponding data length according to the priority and/or the importance level of the at least one flow; or
retaining or discarding data of a corresponding data length according to the priority and/or the importance level of the at least one flow.

18. The method according to claim 16 or 17, wherein the method further comprises at least one of the following:
receiving a first indication delivered by a second network device, wherein the first indication is used to indicate at least one of the following: a load state, a level of the load state, a data discarding corresponding rule, or a data retaining corresponding rule; or
determining at least one of the following: a load state, a level of a load state, a data discard timer duration, a priority and/or an importance level corresponding to data discarding, a data retaining length, or a data discarding length.

19. The method according to claim 18, wherein the determining the load state comprises at least one of the following:
obtaining a load state from an application server of the first communication device;
obtaining a load state indicated by a user experience indication;
determining a load state according to Quality of Experience (QoE) information; or
determining a load state according to an error rate and/or a channel quality condition.

20. A data scheduling method, applied to a second communication device, the method comprising:
delivering first information to a first communication device, wherein the first information is used to indicate an association relationship between data of at least one flow.

21. The method according to claim 20, wherein the data of the at least one flow is carried in a same Transport Block (TB) or is carried in a transmission resource indicated by a same Uplink grant (UL grant).

22. The method according to claim 21, wherein the method further comprises:
delivering second information and/or third information to the first communication device, wherein
the second information is used to indicate a flow that is allowed to transmit data by using the same TB and/or the transmission resource indicated by the same UL grant, and the third information is used to indicate a transmission configuration when transmitting data of different flows by using the same TB and/or the transmission resource indicated by the same UL grant.

23. The method according to claim 22, wherein the second information comprises at least one of the following:
information indicating at least one logical channel that is allowed to transmit data by using the same TB;
information indicating at least one logical channel that is allowed to transmit data by using the transmission resource indicated by the same UL grant;
information indicating an associated priority of at least one logical channel that is allowed to transmit data by using the same TB; or
information indicating an associated priority of at least one logical channel that is allowed to transmit data by using the transmission resource indicated by the same UL grant.

24. The method according to claim 22, wherein the third information is used to indicate at least one of the following:
a number of bytes occupied in the same TB by data of different flows;
a Modulation and Coding Scheme (MCS) used by data of different flows;
a transmission resource occupied, in the transmission resource indicated by the same UL grant, by data of different flows;
a Subcarrier Spacing (SCS) used when transmitting data of different flows by using the transmission resource indicated by the same UL grant; or
a duration of a Physical Uplink Shared Channel (PUSCH) used when transmitting data of different flows by using the transmission resource indicated by the same UL grant.

25. The method according to any one of claims 20 to 24, wherein the association relationship comprises at least one of the following:
Quality of Service (QoS) coordination;
time synchronization;
belonging to one QoS flow;
belonging to one Protocol Data Unit (PDU) set;
belonging to one radio bearer; or
belonging to one application server; wherein
the QoS coordination indicates that values of QoS parameters are identical, or a difference between the QoS parameters is less than or equal to a predetermined threshold; and the QoS parameter comprises at least one of a packet error rate, latency, jitter, or reliability.

26. The method according to any one of claims 20 to 24, wherein the at least one flow comprises at least one of the following:
a service;
a PDU session;
a QoS flow;
a service data flow;
a radio bearer;
a logical channel;
a PDU set;
a PDU;
a sampling flow;
a slice; or
a tile.

27. The method according to claim 25, wherein QoS Identifiers (QFIs) corresponding to different flows in the at least one flow are different or the same.

28. A data scheduling apparatus, comprising:
a first transceiver unit, configured to transmit or receive data of at least one flow, wherein there is an association relationship between the data of the at least one flow.

29. A data scheduling apparatus, comprising:
a second transceiver unit, configured to deliver first information to a first communication device, wherein the first information is used to indicate an association relationship between data of at least one flow.

30. A first communication device, comprising a first processor and a first communication interface, wherein
the first communication interface is configured to transmit or receive data of at least one flow, wherein there is an association relationship between the data of the at least one flow.

31. A second communication device, comprising a second processor and a second communication interface, wherein
the second communication interface is configured to deliver first information to a first communication device, wherein the first information is used to indicate an association relationship between data of at least one flow.

32. A communication device, comprising a processor and a memory configured to store a computer program executable by the processor, wherein
the processor is configured to execute the computer program to implement the steps of the method according to any one of claims 1 to 19, or implement the steps of the method according to any one of claims 20 to 27.

33. A storage medium storing thereon a computer program, wherein the computer program is used to be executed by a processor to implement the steps of the method according to any one of claims 1 to 19, or implement the steps of the method according to any one of claims 20 to 27.
